# EUROPÄISCHE PATENTSCHRIFT

(11) **EP 3 580 510 B1**
(45) Veröffentlichungstag und Bekanntmachung des Hinweises auf die Patenterteilung: **24.03.2021**
(21) Anmeldenummer: 18709253.1
(22) Anmeldetag: 29.01.2018
(51) Int. Cl.: F26B 3/12, F26B 25/00, F26B 21/10

(54) **SPRÜHDÜSE ZUM VERSPRÜHEN EINES ZU TROCKNENDEN GUTES, SPRÜHTROCKNER UND VERFAHREN ZUM ÜBERWACHEN UND/ODER STEUERN UND/ODER REGELN EINER TEMPERATUR BEIM VERSPRÜHEN**
SPRAY NOZZLE FOR SPRAYING AN ARTICLE TO BE DRIED, SPRAY DRYER, AND METHOD FOR MONITORING AND/OR CONTROLLING AND/OR REGULATING A TEMPERATURE DURING THE SPRAYING PROCESS
BUSE DE PULVÉRISATION SERVANT À PULVÉRISER UN PRODUIT À SÉCHER, SÉCHEUR PAR PULVÉRISATION ET PROCÉDÉ PERMETTANT DE SURVEILLER ET/OU DE COMMANDER ET/OU DE RÉGULER UNE TEMPÉRATURE LORS DE LA PULVÉRISATION

(30) Priorität: 10.02.2017 DE 102017102716
(43) Veröffentlichungstag der Anmeldung: 18.12.2019
(73) Patentinhaber: Lübbers Anlagen- und Umwelttechnik GmbH, 99947 Bad Langensalza (DE)
(72) Erfinder: LÜBBERS, Matthias, 99947 Bad Langensalza (DE)
(74) Vertreter: Weidner Stern Jeschke
(86) Internationale Anmeldenummer: PCT/DE2018/200003
(87) Internationale Veröffentlichungsnummer: WO 2018/145701

(56) Entgegenhaltungen:
- WO-A1-2011/063808
- DE-A1-102004 052 705
- JP-A- 2014 001 414
- US-A- 3 173 612
- US-A1- 2008 016 972
- US-A1- 2014 377 395

## Beschreibung

Die Erfindung betrifft eine Sprühdüse zum Versprühen eines zu trocknenden Gutes, wobei die Sprühdüse an einer Außenwand eine Nut aufweist. Des Weiteren betrifft die Erfindung einen Sprühtrockner zum Trocknen eines zu trocknenden Gutes und ein Verfahren zum Überwachen und/oder Steuern und/oder Regeln einer Temperatur beim Versprühen eines zu trocknenden Gutes.

Beim Sprühtrocknen muss das Versprühen eines zu trocknenden Gutes mittels einer Sprühdüse homogen und kontinuierlich erfolgen. Ansonsten kommt es zu einem inhomogenen Trocknungsprozess und zum Absetzen von Bestandteilen des zu trocknenden Gutes an der Sprühdüse oder an den Innenwänden einer Trocknungskammer. Neben der Verschlechterung der Qualität des getrockneten Produktes treten am Ort des Absetzen des zu trocknenden Gutes oder seiner Bestandteile unerwünschte, potentielle Flammenherde (sogenannte Hot Spots) mit einem erhöhtem Brand- und Explosionsrisiko auf. Diese Gefahr besteht insbesondere dann, wenn sich organische Bestandteile im zu trocknenden Gut befinden und/oder der Sprühprozess unterbrochen wird.

Zur Prozessüberwachung der Sprühtrocknung wird üblicherweise die Temperatur am Einlass und am Auslas der Trocknungskammer gemessen. Dadurch können aber keine lokalen, potentiellen Flammenherde mit erhöhter Temperatur detektiert werden.

Die WO 2011/063808 offenbart ein Verfahren zur Überwachung eines Sprühtrockners, bei dem einer oder mehrere Infrarotkameras über Lanzen jeweils ein Bildfeld in die Trocknungskammer des Sprühtrockners ermöglicht und in einem dadurch vorgegebenen Bereich die Temperatur gemessen wird.

Nachteilig bei diesem Verfahren ist, dass die Infrarotkamera durch ein Inspektionsglas geschützt werden muss, auf dem sich ebenfalls Sprühtropfen und Produktpartikel absetzen können. Zudem kann aufgrund der Konstruktion des Sprühtrockners eine notwendige Lanzeneinführung in die Trocknungskammer und Ausrichtung der Infrarotkamera auf eine Sprühdüse schwierig sein. Aufgrund der eingeschränkten Blickrichtung kann es vorkommen, dass die Infrarotkamera auf der betrachteten Seite der Sprühdüse keine Temperaturerhöhung feststellt, jedoch es auf der nicht-betrachteten gegenüberliegenden Seite zum Absetzen von Trocknungsgut und somit zur Bildung von potentiellen Flammenherden kommt. Allgemein besteht die Gefahr, dass die Infrarotkamera auf ein Bildfeld ausgerichtet ist, in dem ein bestehender Flammenherd sich gerade nicht befindet.

Die JP2014001414A offenbart ein Verfahren und eine Vorrichtung zum Nitrieren einer Metalloberfläche wie beispielsweise Stahl oder ähnliches.

In der US 3173612 wird ein Verfahren zum Erzeugen von Aerosolen, Sprays und Dispersionen und eine entsprechende Vorrichtung dazu offenbart.

Eine Vorrichtung und ein Verfahren zum Erfassen der Verbrennungsbedingungen unter Verwendung von Ionensignalen zur Verwendung in einer Rückkopplungsregelung eines Dieselmotors wird in der DE 10 2004 052 705 A1 offenbart.

Die WO 2011/063808 A1 offenbart ein Verfahren zur Überwachung eines Sprühtrockners und einen Sprühtrockner mit einer oder mehreren Infrarotkameras.

In der US 2014/0377395 A ist eine Heißkanaldüsenstruktur offenbart, die eine rohrförmige Düse und mindestens eine Temperaturmesskomponente umfasst.

Die US 2008/016972 A1 offenbart ein Monitoringsystem für einen Zerstäuber mit einem Zerstäuberrad, welches von einem Motor angetrieben wird. Eine Sensorbox ist seitlich am Motor moniert und ein Sensor für die Detektion des durch den Motor fließenden Stroms ist innerhalb der Sensorbox angeordnet.

Aufgabe der Erfindung ist es, den Stand der Technik zu verbessern.

Gelöst wird die Aufgabe durch eine Sprühdüse zum Versprühen eines zu trocknenden Gutes, wobei die Sprühdüse an einer Außenwand eine Nut aufweist, und ein Messsensor zum Messen einer Temperatur in der Nut angeordnet ist, wobei dem Messsensor eine autarke Energieversorgung zugeordnet und die autarke Energieversorgung, insbesondere mittels eine Piezoelements, in der Nut angeordnet ist, sodass der Messsensor frei von einer externen kabelbasierten Energieversorgung betreibbar ist.

Somit ist es möglich, die real auftretende Temperatur direkt an der Sprühdüse zu messen und frühzeitig eine erhöhte Temperatur und somit die Bildung von Verkrustungen und potentiellen Flammenherden festzustellen.

Hierbei hat sich überraschenderweise gezeigt, dass gerade die Anordnung des Messsensors in der Nut an der Außenwand der Sprühdüse ein geeigneter Messort ist, um frühzeitig eine Temperaturerhöhung, zu bestimmen.

Durch die autarke Energieversorgung des Messsensors in der Nut, muss kein externes Kabel zur Energieversorgung zu dem Messsensor geführt werden, welches ansonsten den Betrieb einer Sprühdüse beeinträchtigen könnte, beispielsweise durch Verheddern des Kabels bei einer rotierenden Sprühdüse.

Ein wesentlicher Gedanke der Erfindung beruht darauf, dass durch Anordnung des Messsensors direkt in der Nut an der Außenwand der Sprühdüse die Erfassung der Temperatur direkt am Ort des Versprühens und des Auftretens von Ablagerungen erfolgt, wobei letztere insbesondere eine Druck- und/oder Temperaturveränderung bewirken.

Es hat sich überraschend als besonders vorteilhaft erwiesen, dass ein Messsensor mit einem Piezoelement in der Nut angeordnet ist und das Piezoelement in einer Ausdehnungsabmessung der Nut eingespannt ist. Dadurch, dass das Piezoelement und/oder der Messsensor fest zwischen den gegenüberliegenden Innenwänden der Nut eingespannt ist oder sind, ist die gerichtete mechanische Verformung des Piezoelementes direkt zur internen Spannungsversorgung des Messsensors nutzbar.

Besonders vorteilhaft ist, dass mit der hier beschriebenen Sprühdüse bestehende Trocknungssystem äußerst kostengünstig nachgerüstet werden können.

Folgendes Begriffliche sei erläutert:

Eine "Sprühdüse" (auch "Zerstäubungsdüse") ist insbesondere eine Düse zum Versprühen eines flüssigen, zu trocknenden Gutes in feine Tröpfchen und zur gleichzeitigen Verteilung der feinen Tröpfchen in einem Trocknungsgas. Die Sprühdüse dient insbesondere dazu, durch Versprühen eine sehr große reaktive Flüssigkeitsoberfläche zu erzeugen. Bei einer Sprühdüse handelt es sich insbesondere um einen Rotationszerstäuber, eine Einstoffdüse, Zweistoffdüse, Dreistoffdüse, Vierstoffdüse und/oder Ultraschalldüse. Zudem ist von dem Begriff ein Rotationszerstäuber (auch Drehzerstäuber genannt) mit umfasst.

Die Sprühdüse weist an einer Außenwand eine Nut auf, in welcher ein Messsensor zum Messen der Temperatur angeordnet ist. Die Sprühdüse hat insbesondere eine Düsenöffnung von 0,1mm bis 5mm, bevorzugt von 0,5mm bis 3mm. Mittels der Sprühdüse ist insbesondere ein Volumenstrom von bis zu 750L/h Flüssigkeit realisierbar.

Unter "Versprühen" ist insbesondere ein Verteilen einer Flüssigkeit in feine Tröpfchen als Aerosol (Nebel) in einem Gas zu verstehen.

Bei einem "zu trocknenden Gut" handelt es sich insbesondere um eine Flüssigkeit, wie eine Lösung, Suspension oder Emulsion, welche zum Trocknen und Ausbilden von trockenen Partikeln (Einzelpartikel, Agglomerate und/oder Granulate) in einem Trocknungsgas versprüht wird.

Eine "Außenwand" der Sprühdüse ist eine Wand, welche einen Außenraum, insbesondere den Trocknungsraum, von dem Innenraum der Sprühdüse trennt. Die Außenwand ist insbesondere die Wand, welche in Kontakt mit einem Trocknungsgas und/oder dem Trocknungsraum steht.

Eine "Nut" ist insbesondere eine längliche Vertiefung, welche in einer Außenwand der Sprühdüse angeordnet ist. Bei der Nut handelt es sich insbesondere um eine durchlaufende oder eine abgesetzte Nut. Die Nut weist insbesondere einen rechteckigen, trapezförmigen, runden, nach außen abgeschrägten und/oder schwalbenschwanzförmigen Querschnitt auf. In der Nut ist oder sind insbesondere ein Messsensor und/oder eine Antenne angeordnet. Die Nut kann beispielsweise quer zur Längsrichtung der Sprühdüse radial umlaufend im Außenmantel der Sprühdüse ausgeführt sein. Ebenso kann die Nut als abgesetzte Nut an derjenigen, nach unten ausgerichteten Außenwand der Sprühdüse angeordnet sein, an der auch die Düsenöffnung liegt. Auch eine Aussparung wird vorliegend als Nut verstanden.

Ein "Messsensor" ist im Rahmen der Erfindung ein technisches Bauteil, welches dem Messen der Temperatur dient. Die erfasste Temperatur wird durch den Messsensor in ein weiterverarbeitbares elektrisches Messsignal umgeformt. Ein Messsensor ist insbesondere im Hinblick auf die Energieverwendung ein passiver Sensor, da dieser keine elektrische Hilfsenergie zur Erzeugung eines elektrischen Messsignals benötigt.

Insbesondere weist der Messsensor ein stromerzeugendes Piezoelement auf. Ein Messsensor ist insbesondere ein SAW-Sensor (Surface Acoustic Wave; beispielsweise ein SAW Sensor Element der SAW COMPONENTS Dresden GmbH), welcher eine akustische Oberflächenwelle ausnutzt, welche sich planar auf einer Oberfläche nur in zwei Dimensionen des SAW-Sensors ausbreitet. Ein SAW-Sensor besteht insbesondere aus einem piezoelektrischen Substrat, auf dem metallische Strukturen (Transponder und Reflektor) aufgebracht sind. Bei einem SAW-Sensor wird insbesondere ein eingestrahltes Signal als Echo über die gleiche Antenne zurückgegeben, nachdem das Signal durch die akustische Oberflächenwellenstruktur gelaufen ist und an zwei oder mehreren Strukturen reflektiert wurde. Hierbei nutzt der SAW-Sensor insbesondere die Abhängigkeit der Oberflächenwellengeschwindigkeit von der mechanischen Verspannung und/oder der Temperatur. Der SAW-Sensor ist insbesondere in einem weiten Temperaturbereich von -55°C bis über 400°C beständig.

Ein "Messsignal" ist insbesondere ein weiterverarbeitbares elektrisches Signal, welches aus einer qualitativen oder quantitativen Messgröße umgeformt wird oder wurde. Bei einem Messsignal handelt es sich insbesondere auch um eine physikalische Größe, bei welcher ein oder mehrere Parameter Informationen über eine oder mehrere variable Messgrößen tragen. Ein Messsignal ist insbesondere auch eine elektrische Größe wie Stromstärke oder -spannung, um Informationen aufzunehmen und zu transportieren. Hierbei wird der Parameter des Messsignals insbesondere direkt verwendet oder die Information wird mittels Modulation einem sogenannten Trägersignal aufgeprägt. Die Übertragung des Messsignals erfolgt insbesondere mittels elektromagnetischer Wellen als Träger für eine Information (Funksignal) oder durch optische Übertragung.

Eine "autarke Energieversorgung" ist insbesondere eine Versorgung des Messsensors mit der benötigten Energie, welche ausschließlich durch den Messsensor selbst und/oder einem dem Messsensor zugeordneten externen Empfänger erzeugt wird. Die autarke Energieversorgung ist insbesondere frei von der Bereitstellung der benötigten Energie mittels einer Batterie und/oder eines stromführenden Kabels. Eine autarke Energieversorgung kann insbesondere kontinuierlich Energie bereitstellen und somit eine sehr lange Standzeit des Messsensors und der Sprühdüse von über 10.000h, bevorzugt über 50.000h gewährleisten.

Ein "Piezoelement" ist insbesondere ein Bauteil, welches den Piezoeffekt ausnutzt, um bei Einwirken einer mechanischen Kraft eine elektrische Spannung zu erzeugen. Insbesondere tritt bei einer gerichteten Verformung des Piezoelementes eine Änderung der elektrischen Polarisation und somit ein Auftreten einer elektrischen Spannung am Piezoelement auf. Bei der gerichteten Verformung wirkt der angelegte Druck insbesondere nur von zwei gegenüberliegenden Seiten auf das Piezoelement. Somit ist eine gerichtete Verformung insbesondere durch das Einspannen des Piezoelementes in zwei sich gegenüberliegende Seitenwände einer Nut realisierbar. Ein Piezoelement weist insbesondere einen Piezokristall oder eine piezoelektrische Keramik auf. Auf dem Piezoelement sind insbesondere Elektroden aufgebracht, sodass das durch eine mechanische Kraft aufgrund der Einspannung hervorgerufene elektrische Feld eine Spannung an den Elektroden bewirkt. Bei einem Piezoelement kann es sich insbesondere auch um einen Piezostapel handeln, welcher aus mehreren dünnen Piezoelementen mit dazwischenliegenden Elektroden besteht. Insbesondere kann ein Piezoelement auch als Strom- oder Spannungsquelle verwendet werden.

"Frei von einer externen kabelbasierten Energieversorgung" bedeutet, dass kein durch einen elektrischen Leiter geführter elektrischer Strom zur Energieversorgung verwendet wird, welcher aus einer externen Energiequelle, beispielsweise einer Batterie und/oder dem Stromnetz, bereitgestellt wird. Eine externe kabelbasierte Energieversorgung bedeutet insbesondere, dass die Energieerzeugung extern außerhalb des Messsensors und/oder seiner zugeordneten Bauteile, wie beispielsweise einem externen Empfänger, erfolgt.

In einer weiteren Ausführungsform der Sprühdüse weist der Messsensor einen Sender und eine Antenne zur drahtlosen Übertragung eines Messsignals auf.

Somit kann das Auslesen und/oder Auswerten des Messsignals außerhalb der Sprühdüse und/oder eines Sprühtrockners erfolgen, sodass die Sprühdüse kleiner dimensioniert werden kann. Zudem sind dadurch nur der Messsensor, der Sender und die Antenne den Umgebungsbedingungen beim Versprühen ausgesetzt und nur diese müssen entsprechend beständig ausgelegt werden.

Es ist insbesondere vorteilhaft, dass neben der kabelfreien autarken Energieversorgung des Messsensors auch die Übertragung des Messsignals drahtlos erfolgt, sodass der Betrieb der Sprühdüse nicht durch eine Kabelführung behindert wird.

Ein "Sender" ist insbesondere eine Einrichtung, welche ein Messsignal, andere Signale und/oder Informationen in elektromagnetische Wellen umwandelt und in dieser Form abstrahlt. Der Sender besteht insbesondere aus einem Oszillator mit nachfolgendem Verstärker, wobei dem Sender eine Sendeantenne zugeordnet ist. Bei einem Sender kann es sich insbesondere auch um einen Transponder handeln, welcher als Funk-Kommunikationsgerät eingehende Signale aufnimmt und automatisch beantwortet. Ein Transponder liest insbesondere Messdaten und/oder andere Daten aus einem zugeordneten Speicher aus und übermittelt diese, sodass eine Identität und/oder weitere gespeicherte Informationen übertragen wird oder werden. Bei einem Transponder kann es sich insbesondere um einen passiven Transponder handeln, welcher seine Betriebsspannung in einem elektromagnetischen Feld eines externen Empfängers entnimmt, oder um einen aktiven Transponder, welcher die Spannungsversorgung des Messsensors zur Versorgung seines Prozessors und für die Datenübertragung nutzt. Ein Transponder kann insbesondere ein RFID-Transponder und/oder ein Induktionstransponder sein. Insbesondere kann ein Sender und/oder Transponder selbst eine Antenne aufweisen oder dem Sender und/oder Transponder ist eine separate Antenne zugeordnet.

Eine "Antenne" ist insbesondere eine technische Vorrichtung zum Senden oder Empfangen von elektromagnetischen Wellen und/oder Signalen. Eine Antenne wird insbesondere zur drahtlosen Kommunikation verwendet. Eine Antenne erzeugt insbesondere elektrische und/oder magnetische Felder.

Eine "drahtlose Übertragung" ist insbesondere die Übertragung von Signalen aller Art mit Hilfe von modulierten elektromagnetischen Wellen. Bei einer "drahtlose Übertragung" findet die Übertragung selbst ohne Verwendung eines Übertragungskabels statt.

Um eine Einwirkung durch die Umgebungsbedingungen und/oder eine Beschädigung zu minimieren, ist oder sind der Messsensor und/oder die Antenne in der Nut mittels eines Vergussmaterials eingegossen.

Zudem ist oder sind der Messsensor und/oder die Antenne in seiner oder ihrer Anordnung in der Nut dadurch lagefixiert, sodass ihre Position und/oder die Position des Piezoelementes durch von außen einwirkende Kräfte, wie beispielsweise durch die Rotation der Sprühdüse, nicht verändert wird.

Ein "Vergussmaterial" dient zum Eingießen des Messsensors, seines Piezoelementes, seiner autarken Energieversorgung, seines Senders und/oder seiner Antenne in der Nut, sodass diese umhüllt, gegen das Eindringen von Feuchtigkeit, Partikeln und/oder gegen weitere Umweltbedingungen geschützt und in der Nut fixiert sind sowie deren mechanische Stabilität erhöht ist. Ein Vergussmaterial ist insbesondere Quarzglas und/oder ein lebensmittelechter Kunststoff.

In einer weiteren Ausführungsform ist der Sprühdüse ein externer Empfänger zum Auslesen, Auswerten und/oder Überwachen des Messsignals zugeordnet.

Somit kann die weitere Messsignalverarbeitung und -auswertung in einer Entfernung von der Sprühdüse angeordnet sein. Folglich müssen die Bauteile des externen Empfängers nicht hitzebeständig und/oder beständig gegenüber den Umweltbedingungen der Sprühdüse und/oder eines Sprühtrockners sein. Es ist besonders vorteilhaft, dass durch die externe Anordnung des Empfängers dieser auch Bestandteil einer Steuerung- und Regeleinrichtung einer gesamten Sprühtrocknungsanlage sein kann.

Ein "Empfänger" ist insbesondere ein Gerät oder eine spezifische Baugruppe, welche ein Antennensignal entstört, verstärkt und/oder demoduliert. Ein Empfänger empfängt insbesondere die elektromagnetischen Signale einer Sprühdüse und wandelt diese mit Hilfe von elektronischen Schaltungen in digitale, hörbare und/oder sichtbare Signale und/oder Befehle zur Funk-Fernsteuerung um. Ein externer Empfänger kann insbesondere ein empfangenes elektromagnetisches Signal detektieren, daraus veränderliche Zustände, Daten und/oder Informationen gewinnen, signalisieren und/oder anzeigen. Neben dem Empfangen von elektromagnetischen Signalen kann ein externer Empfänger auch Signale senden. Bei einem externen Empfänger kann es sich insbesondere auch um ein RFID-Lesemodul handeln, welches insbesondere auch gezielte Signale, wie beispielsweise ein Aktivierungssignal, an einen Transponder senden kann. Neben einem Zustand der Sprühdüse kann der externe Empfänger als RFID-Lesegerät insbesondere auch eine Serienidentifikationsnummer der Sprühdüse und/oder deren Status auslesen und/oder anzeigen.

Um eine optimale drahtlose Übertragung eines Messsignals zu gewährleisten, weist der Sender eine Frequenz im Bereich von 9kHz bis 3.000GHz, bevorzugt von 400MHz bis 2,5GHz auf.

Somit kann ein weiter Frequenzbereich von einer Langwelle bis zu einer ultrahohen Frequenz ausgenutzt werden. Somit kann je nach Übertragungsbedingungen und gewünschter Reichweite von der Sprühdüse zum externen Empfänger eine geeignete Frequenz gewählt werden. Beispielsweise kann bei Verwendung von Dezimeterwellen oder Mikrowellen eine Reichweite von 3m bis 10m erzielt werden.

Es ist besonders vorteilhaft, dass bei Verwendung von mehreren Sprühdüsen in einem Sprühtrockner jeder Sender der jeweiligen Sprühdüse eine unterschiedliche Frequenz verwendet. Dadurch wird die Eindeutigkeit der übertragenen und von dem externen Empfänger ausgelesenen Signale erhöht.

In einer weiteren Ausführungsform der Sprühdüse ist mittels des Senders eine Information zur Identifizierung der Sprühdüse sendbar.

Somit kann bei Verwendung von mehreren Sprühdüsen das jeweilige Messsignal eindeutig der zugehörigen Sprühdüse zugeordnet werden und diese eindeutig identifiziert werden.

Hierzu kann die Identifikation insbesondere durch Übertragen einer Serienidentifikationsnummer, eines speziellen Identifikationssignals und/oder -codes an den externen Empfänger erfolgen.

Es ist besonders vorteilhaft, dass im Falle eines SAW-Sensors die Identifikation über seine Resonanzfrequenz erfolgen kann.

Um den optimalen Betrieb einer Sprühdüse und/oder des Trocknens eines zu trocknenden Gutes zu überwachen, ist der Messsensor ein Temperatursensor.

Somit kann über den Abfall des Druckes und/oder einen Anstieg der Temperatur ein Ausfall und/oder Wartungsbedarf einer Sprühdüse frühzeitig erkannt werden.

Es ist besonders vorteilhaft, dass durch einen Temperatursensor direkt an der Sprühdüse Ablagerungen und potentielle Flammenherde frühzeitig erkannt und somit die Brand- und Explosionsgefahr vermindert werden kann.

Ein "Temperatursensor" ist insbesondere ein elektrisches oder elektronisches Bauelement, welches ein elektrisches Signal als Maß für die Temperatur liefert. Mittels des Temperatursensors ist die Temperatur insbesondere in einem Bereich von -55°C bis 1.200°C, bevorzugt von -40°C bis 350°C messbar. Bei einem Temperatursensor handelt es sich insbesondere um einen SAW-Sensor.

In einer weiteren Ausführungsform ist die Sprühdüse mittels einer lösbaren Verbindung mit einer Zufuhrleitung verbunden.

Durch die lösbare Verbindung ist eine einfache Austauschbarkeit und Nachrüstbarkeit der Sprühdüse gegeben. Insbesondere muss nur der vordere Teil der Sprühdüse mit dem Messsensor ausgetauscht werden, sodass Material und Kosten eingespart werden können.

Eine "lösbare Verbindung" ist insbesondere eine Verbindung, welche sich durch Umkehren des Verbindungsvorganges wieder zerstörungsfrei trennen lässt. Eine lösbare Verbindung ist insbesondere eine Schraubverbindung mittels eines Gewindes oder eine Steckverbindung.

Eine "Zufuhrleitung" ist insbesondere eine Leitung zur Zufuhr des zu trocknenden Gutes (Flüssigkeit) und/oder des Trocknungsgases zu der Sprühdüse.

In einem weiteren Aspekt der Erfindung wird die Aufgabe gelöst durch einen Sprühtrockner zum Trocknen eines zu trocknenden Gutes mit mindestens einer zuvor beschriebenen Sprühdüse.

Somit können in einem Sprühtrockner direkt an den Sprühdüsen als Ort des Entstehens von Ablagerungen und Bereichen mit erhöhten Temperaturen diese messtechnisch sicher erfasst und überwacht werden. Folglich kann das Brand- und Explosionsrisiko vermindert und ein Ausfall einer Sprühdüse und/oder des gesamten Sprühtrockners vermieden und deren Standzeit erhöht werden.

Zudem kann durch die genauere messtechnische Erfassung, Überwachung und/oder Anpassung des Trocknens eine homogenere Temperaturverteilung im Trocknungsraum und somit ein qualitativ hochwertigeres Trocknungsprodukt erzielt werden.

Ein "Sprühtrockner" (auch Trockenturm genannt) ist insbesondere eine Einrichtung zur Trocknung von Lösungen, Suspensionen oder Emulsionen. In einem Sprühtrockner wird insbesondere mittels einer Sprühdüse das zu trocknende Gut in einen Trocknungsgasstrom eingebracht, welches in sehr kurzer Zeit (wenige Sekunden bis Bruchteilen einer Sekunde) zu einem feinen Pulver trocknet. Ein Sprühtrockner weist insbesondere mindestens eine Sprühdüse, eine Zufuhr für das Trocknungsgas und das zu trocknende Gut und einen Trocknungsraum auf.

Im "Behälter" ist im Raum des Sprühtrockners, in dem das Trocknen des Sprühguts erfolgt.

In einem zusätzlichen Aspekt der Erfindung wird die Aufgabe gelöst durch ein Verfahren zum Überwachen und/oder Steuern und/oder Regeln einer Temperatur beim Versprühen eines zu trocknenden Gutes mittels eines zuvor beschriebenen Sprühdüse oder in einem zuvor beschriebenen Sprühtrockner mit folgenden Schritten:
- Versprühen des zu trocknenden Gutes mittels der Sprühdüse in einem Trocknungsgas,
- Messen der Temperatur mittels eines Messsensors der Sprühdüse während des Trocknens des zu trocknenden Gutes,
- Überwachen und/oder Steuern und/oder Regeln der Temperatur während des Trocknens des zu trocknenden Gutes.

Somit kann ein Verfahren bereitgestellt werden, welches ein schnelles und lokal genaueres Überwachen von potentiellen Flammenherden beim Versprühen eines zu trocknenden Gutes erlaubt. Folglich kann eine homogenere Temperaturverteilung beim Sprühtrocknen und somit qualitativ hochwertigere getrocknete Partikel erzielt werden.

Bei einem "Trocknungsgas" handelt es sich insbesondere um Luft und/oder ein Inertgas wie beispielsweise Stickstoff. Das Trocknungsgas wird insbesondere als Gasstrom durch den Sprühtrockner geführt, um das zu trocknende Gut zu Trocknen. Das Trocknungsgas weist insbesondere eine Temperatur zwischen 100 und 350°C, bevorzugt zwischen 150 und 250°C auf. Das Trocknungsgas wird im Gegenstrom oder Gleichstrom oder an verschiedenen Stellen in den Sprühtrockner eingebracht.

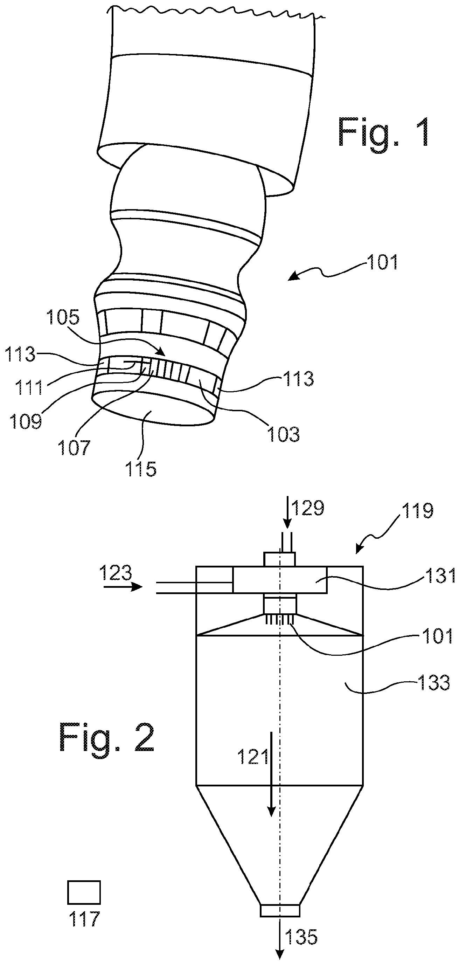

Im Weiteren wird die Erfindung anhand von Ausführungsbeispielen näher erläutert. Es zeigen
- Figur 1: eine schematische Perspektivdarstellung einer Zweistoffdüse mit einem SAW-Sensor in einer außen gelegenen Nut und
- Figur 2: eine stark schematische Schnittdarstellung eines Sprühtrockners mit sechs Zweistoffdüsen.

Eine Zweistoffdüse 101 weist an ihrem unteren Ende eine Düsenöffnung 115 auf. In einem Abstand von 10mm von der Düsenöffnung 115 ist eine radial umlaufende Nut 103 im äußeren Mantel der Zweistoffdüse 101 eingebracht. In der Nut 103 ist ein SAW-Sensor 105 angeordnet. Der SAW-Sensor 105 weist ein piezoelektrisches Substrat 107, einen Sender 109 und eine Antenne 111 auf.

Das piezoelektrische Substrat 107 ist in einer Abmessung der Nut 103, welche in Längsrichtung der Zweistoffdüse 101 liegt, in der Nut 103 eingespannt. Dagegen ist die Breite des SAW-Sensors 105 und des piezoelektrischen Substrats 107 in der radialen Richtung geringer als die Abmessung der umlaufenden Nut 103.

Der SAW-Sensor 105 weist eine Abmessung von 5 x 3mm² und ein Gewicht von 2g auf. Der SAW-Sensor 105 ist zusammen mit seiner Antenne 111 in der Nut 103 mittels eines Quarzglases 113 vergossen, sodass die Nut 103 vollständig mit Quarzglas 113 ausgefüllt ist.

Ein Sprühtrockner 119 weist an seinem Kopf eine Heißluftzufuhr 123, eine Milchzufuhr 129, einen Luftverteiler 131 und sechs Zweistoffdüsen 101 auf. Unterhalb der sechs Zweistoffdüsen 101 ist der Trocknungsraum 133 angeordnet und am untersten Ende des Sprühtrockners 119 befindet sich ein Milchpulver- und Luftabzug. In 15m Entfernung vom Sprühtrockner 119 befindet sich ein externer Empfänger 117.

Folgende Arbeitsgänge werden mit den Sprühdüsen 101 in dem Sprühtrockner 119 realisiert:

Voreingedickte Milch wird über die Milchzufuhr 129 und Heißluft mit einer Temperatur von 180°C über die Heißluftzufuhr 123 und den Luftverteiler 131 den sechs Zweistoffdüsen 101 im Sprühtrockner 119 zugeführt. Mittels der sechs Zweistoffdüsen 101 wird die voreingedickte Milch in feine Tröpfchen versprüht und durch die im Gleichstrom zugeführte Heißluft getrocknet. Dabei fallen die versprühten Tröpfchen in Gleichstrom durch den Heißluftstrom 121, wobei sich innerhalb von einer Sekunde Milchpulver bildet, welches auf eine Temperatur von 60°C erwärmt wird. Das getrocknete Milchpulver wird am Fuße des Sprühtrockners 119 über den Milchpulver- und Luftabzug 135 abgezogen. Anschließend wird das Milchpulver über einen nicht gezeigten Fliehkraftabscheider von dem Luftstrom getrennt.

Während des Versprühens der voreingedickten Milch messen die SAW-Sensoren 105, welche jeweils an den sechs Zweistoffdüsen 101 angeordnet sind, die jeweiligen Temperaturen. Dadurch, dass die piezoelektrischen Substrate 107 jeweils zwischen den beiden gegenüberliegenden Wänden der jeweiligen Nut 105 in Längsrichtung der Zweistoffdüse 101 eingespannt sind, erzeugen die piezoelektrischen Substrate 107 jeweils eine elektrische Spannung, welche zur kontinuierlichen oder diskontinuierlichen elektrischen Spannungsversorgung der jeweiligen SAW-Sensoren 105 dient.

Die SAW-Sensoren 105 senden ihre Temperaturmesssignale jeweils mittels ihres Senders 109 und ihrer Antenne 111 an den externen Empfänger 117. Hierbei senden die SAW-Sensoren 105 mit unterschiedlichen Frequenzen im Bandbereich von 2.400MHz bis 2.483MHz. Dadurch kann der externe Empfänger 117 eindeutig die sechs Zweistoffdüsen 101 identifizieren und die übertragenen Temperatursignale eindeutig den einzelnen Zweistoffdüsen 101 zuordnen. Der externe Empfänger 117 überwacht die Temperatursignale der sechs Zweistoffdüsen 101 während des Trocknens des voreingedickten Milchpulvers.

Der Empfänger 117 detektiert eine erhöhte Temperatur an einer der sechs Zweistoffdüsen 101 und bewirkt über eine speicherprogrammierbare Steuerung eine Reduzierung des Heißluftstroms durch diese eine Zweistoffdüse 101. Da die nachfolgenden Messungen an dieser Zweistoffdüse 101 weiterhin eine zu hohe Temperatur anzeigen, um eine mögliche Entflammung von abgesetztem Milchpulver an dieser Zweistoffdüse 101 zu verhindern, wird diese Zweistoffdüse 101 automatisch außer Betrieb genommen.

Somit werden eine Zweistoffdüse und ein Sprühtrockner bereitgestellt, welche beim Versprühen von voreingedickter Milch eine homogene Temperaturverteilung im Trocknungsraum gewährleisten und somit die Brand- und Explosionsgefahr herabsetzen. Gleichzeitig wird durch die homogene Temperaturverteilung an allen Zweistoffdüsen ein qualitativ sehr hochwertiges und gleichmäßig getrocknetes Milchpulver produziert.

### Bezugszeichenliste

- 101: Zweistoffdüse
- 103: Nut
- 105: SAW-Sensor
- 107: Piezoelektrisches Substrat
- 109: Sender
- 111: Antenne
- 113: Quarzglas
- 115: Düsenöffnung
- 117: externer Empfänger
- 119: Sprühtrockner
- 121: Heißluftstrom
- 123: Heißluftzufuhr
- 129: Milchzufuhr
- 131: Luftverteiler
- 133: Trocknungsraum
- 135: Milchpulver- und Luftabzug

## Patentansprüche

1. Sprühdüse (101) zum Versprühen eines zu trocknenden Gutes, wobei die Sprühdüse (101) an einer Außenwand eine Nut (103) aufweist, wobei ein Messsensor (105) zum Messen einer Temperatur in der Nut (103) angeordnet ist, wobei dem Messsensor (105) eine autarke Energieversorgung zugeordnet und die autarke Energieversorgung in der Nut (103) angeordnet ist, sodass der Messsensor (105) frei von einer externen kabelbasierten Energieversorgung betreibbar ist.

2. Sprühdüse (101) nach Anspruch 1, **dadurch gekennzeichnet, dass** die autarke Energieversorgung mittels eines Piezoelements (107) erfolgt.

3. Sprühdüse (101) nach einem der vorherigen Ansprüche, **dadurch gekennzeichnet, dass** der Messsensor (105) einen Sender (109) und eine Antenne (111) zur drahtlosen Übertragung eines Messsignals aufweist.

4. Sprühdüse (101) nach einem der vorherigen Ansprüche, **dadurch gekennzeichnet, dass** der Messsensor (105) und/oder die Antenne (111) in der Nut (103) mittels eines Vergussmaterials (113) eingegossen ist oder sind.

5. Sprühdüse (101) nach einem der vorherigen Ansprüche, **dadurch gekennzeichnet, dass** der Sprühdüse (101) ein externer Empfänger (117) zum Auslesen, Auswerten und/oder Überwachen des Messsignals zugeordnet ist.

6. Sprühdüse (101) nach einem der Ansprüche 3 bis 5, **dadurch gekennzeichnet, dass** der Sender (109) eine Frequenz im Bereich von 9kHz bis 300GHz, bevorzugt von 400MHz bis 2,5GHz aufweist.

7. Sprühdüse (101) nach einem der Ansprüche 3 bis 6, **dadurch gekennzeichnet, dass** mittels des Senders (109) eine Information zur Identifizierung der Sprühdüse (101) sendbar ist.

8. Sprühdüse (101) nach einem der vorherigen Ansprüche, **dadurch gekennzeichnet, dass** die Sprühdüse (101) mittels einer lösbaren Verbindung mit einer Zufuhrleitung verbunden ist.

9. Sprühtrockner (119) zum Trocknen eines zu trocknenden Gutes mit einem Behälter (133), **gekennzeichnet durch** mindestens eine Sprühdüse (101) nach einem der Ansprüche bis 8.

10. Verfahren zum Überwachen und/oder Steuern und/oder Regeln einer Temperatur beim Versprühen eines zu trocknenden Gutes mittels einer Sprühdüse (101) nach einem der einem der Ansprüche 1 bis 8 oder in einem Sprühtrockner nach Anspruch **gekennzeichnet durch** folgende Schritte:
- Versprühen des zu trocknenden Gutes mittels der Sprühdüse (101) in einem Trocknungsgas,
- Messen der Temperatur mittels eines Messsensors (105) der Sprühdüse (101) während des Trocknens des zu trocknenden Gutes,
- Überwachen und/oder Steuern und/oder Regeln der Temperatur während des Trocknens des zu trocknenden Gutes.

## Claims

1. Spray nozzle (101) for spraying a material to be dried, wherein the spray nozzle (101) comprises a groove (103) on an outside wall, wherein a measuring sensor (105) for measuring a temperature is arranged in the groove (103), wherein a stand-alone energy supply is associated with the measuring sensor (105) and the stand-alone energy supply is arranged in the groove (103), such that the measuring sensor (105) can be operated in a manner free of an external cable-based energy supply.

2. Spray nozzle (101) according to claim 1, **characterised in that** the stand-alone energy supply is achieved by means of a piezo element (107).

3. Spray nozzle (101) according to one of the preceding claims, **characterised in that** the measuring sensor (105) comprises a transmitter (109) and an antenna (111) for wireless transmission of a measuring signal.

4. Spray nozzle (101) according to one of the preceding claims, **characterised in that** the measuring sensor (105) and/or the antenna (111) is or are cast in the groove (103) using a potting material (113).

5. Spray nozzle (101) according to one of the preceding claims, **characterised in that** the spray nozzle (101) is assigned an external receiver (117) for reading out, evaluating and/or monitoring the measuring signal.

6. Spray nozzle (101) according to one of claims 3 to 5, **characterised in that** the transmitter (109) has a frequency in the range of from 9 kHz to 300 GHz, preferably from 400 MHz to 2.5 GHz.

7. Spray nozzle (101) according to any of claims 3 to 6, **characterised in that** an item of information for identifying the spray nozzle (101) can be transmitted by means of the transmitter (109).

8. Spray nozzle (101) according to any of the preceding claims, **characterised in that** the spray nozzle (101) is connected to a supply line by means of a releasable connection.

9. Spray dryer (119) for drying a material to be dried, comprising a container (133), **characterised by** at least one spray nozzle (101) according to one of claims 1 to 8.

10. Method for monitoring and/or controlling and/or regulating a temperature when spraying a material to be dried by means of a spray nozzle (101) according to one of claims 1 to 8 or in a spray dryer according to claim 9, **characterised by** the following steps:
- spraying the material to be dried by means of the spray nozzle (101), in a drying gas,
- measuring the temperature by means of a measuring sensor (105) of the spray nozzle (101) during drying of the material to be dried,
- monitoring and/or controlling and/or regulating the temperature during the drying of the material to be dried.

## Revendications

1. Buse de pulvérisation (101) pour pulvériser un produit à sécher, dans laquelle la buse de pulvérisation (101) présente au niveau d'une paroi extérieure une rainure (103), dans laquelle un capteur de mesure (105) pour mesurer une température est disposé dans la rainure (103), dans lequel une alimentation en énergie autonome est associée au capteur de mesure (105) et l'alimentation en énergie autonome est disposée dans la rainure (103) de sorte que le capteur de mesure (105) peut fonctionner sans une alimentation en énergie externe câblée.

2. Buse de pulvérisation (101) selon la revendication 1, **caractérisée en ce que** l'alimentation en énergie autonome est effectuée au moyen d'un élément piézoélectrique (107).

3. Buse de pulvérisation (101) selon l'une quelconque des revendications précédentes, **caractérisée en ce que** le capteur de mesure (105) présente un émetteur (109) et une antenne (111) pour la transmission sans fil d'un signal de mesure.

4. Buse de pulvérisation (101) selon l'une quelconque des revendications précédentes, **caractérisée en ce que** le capteur de mesure (105) et/ou l'antenne (111) est coulé/coulée ou sont coulés au moyen d'un matériau de scellement (113) dans la rainure (103).

5. Buse de pulvérisation (101) selon l'une quelconque des revendications précédentes, **caractérisée en ce qu'**un récepteur (117) externe pour lire, évaluer et/ou surveiller le signal de mesure est associé à la buse de pulvérisation (101).

6. Buse de pulvérisation (101) selon l'une quelconque des revendications 3 à 5, **caractérisée en ce que** l'émetteur (109) présente une fréquence dans la plage de 9 kHz à 300 GHz, de manière préférée de 400 MHz à 2,5 GHz.

7. Buse de pulvérisation (101) selon l'une quelconque des revendications 3 à 6, **caractérisée en ce qu'**une information pour l'identification de la buse de pulvérisation (101) peut être envoyée au moyen de l'émetteur (109).

8. Buse de pulvérisation (101) selon l'une quelconque des revendications précédentes, **caractérisée en ce que** la buse de pulvérisation (101) est reliée à un conduit d'amenée au moyen d'un raccordement amovible.

9. Séchoir à pulvérisation (119) pour sécher un produit à sécher avec un contenant (133), **caractérisé par** au moins une buse de pulvérisation (101) selon l'une quelconque des revendications 1 à 8.

10. Procédé pour surveiller et/ou commander et/ou réguler une température lors de la pulvérisation d'un produit à sécher au moyen d'une buse de pulvérisation (101) selon l'une quelconque des revendications 1 à 8 ou dans un séchoir à pulvérisation selon la revendication 9,
**caractérisé par** des étapes suivantes :
- la pulvérisation du produit à sécher au moyen de la buse de pulvérisation (101) dans un gaz de séchage ;
- la mesure de la température au moyen d'un capteur de mesure (105) de la buse de pulvérisation (101) pendant le séchage du produit à sécher,
- la surveillance et/ou la commande et/ou la régulation de la température pendant le séchage du produit à sécher.
